# FASCICULE DE BREVET EUROPEEN

(11) **EP 0 470 894 B1**
(45) Date de publication et mention de la délivrance du brevet: **31.08.1994**
(21) Numéro de dépôt: 91402150.6
(22) Date de dépôt: 31.07.1991
(51) Int. Cl.: F16L 39/04, F16L 41/00, B01D 29/35

(54) **Dispositif comprenant un faisceau de tubes montés dans une calandre et présentant avec celle-ci une dilatation différente**
Anlage mit auf einem Kalander montiertem Rohrbündel, beide mit verschiedenen Ausdehnungskoeffizienten
Device with tube bundle mounted on a calander, both having a different expansion coefficient

(30) Priorité: 07.08.1990 FR 9010070
(43) Date de publication de la demande: 12.02.1992
(73) Titulaire: TOTAL RAFFINAGE DISTRIBUTION S.A., 92538 Levallois Perret Cédex (FR)
(72) Inventeur: Durrieu, Marc, F-76310 Sainte Adresse (FR)
(74) Mandataire: Jolly, Jean-Pierre

(56) Documents cités:
- FR-A- 1 059 266
- FR-A- 1 191 640
- US-A- 2 042 564
- US-A- 4 316 802

## Description

### Dispositif comprenant un faisceau de tubes montés dans une calandre et présentant avec celle-ci une dilatation différentielle.

Dans plusieurs domaines de la technique, on utilise un dispositif comprenant un faisceau de tubes montés dans une calandre et présentant avec celle-ci une dilatation différentielle.

C'est le cas par exemple lorsqu'on veut effectuer la séparation des fines particules de catalyseur en suspension dans une charge hydrocarbonée issue d'une unité de craquage catalytique.

Par le brevet FR-A-2 587 629, on connaît un tel dispositif de séparation qui comprend un faisceau de tubes cylindriques ou barrières en matière minérale, par exemple en alumine ou en carbone, revêtue intérieurement d'une ou plusieurs couches d'oxydes métalliques. Ces tubes sont montés parallèlement dans un ensemble métallique appelé module qui comprend une calandre cylindrique fermée à ses extrémités par des parois de fond. Ces dernières sont percées d'orifices dans lesquels sont engagées les extrémités des tubes, des joints en matière connue sous la marque de fabrique "viton" ou en graphite assurant l'étanchéité au niveau desdits orifices. Un fond bombé muni d'une tubulure et de brides de raccordement relie l'extrémité inférieure de la calandre à une tuyauterie de circulation.

Entre l'intérieur des barrières et l'extérieur, on établit une différence de pression qui peut être de l'ordre d'une dizaine de bars. La charge hydrocarbonée ou concentrat pénètre dans le module par ladite tuyauterie d'entrée, circule à l'intérieur des barrières, puis ressort par une tuyauterie de sortie identique à celle d'entrée. Du fait de la différence de pression, une fraction importante de la charge hydrocarbonée, dite le filtrat, traverse les barrières de l'intérieur vers l'extérieur.

Ce dispositif connu présente toutefois un grave inconvénient : le phénomène de dilatation différentielle résultant de l'écart des coefficients de dilatation entre les matières constitutives du module et des barrières, respectivement l'acier et le carbone. Pour absorber ce phénomène, il est prévu selon l'art antérieur, que les joints montés sur chaque barrière encaissent ces variations de longueur. En fait, en présence de fluides tels que la suspension de particules solides de catalyseur dans un liquide, les barrières se collent au niveau des joints. Lors d'une procédure d'arrêt-démarrage du dispositif de microfiltration, et donc en présence de variations importantes de température, les barrières peuvent se rompre, et le dispositif ne joue plus son rôle de rétention des fines de catalyseur.

Cet inconvénient se retrouve également dans tous les dispositifs comprenant très généralement un faisceau de tubes en une première matière monté dans un corps cylindrique en une seconde matière et qui présentent entre eux une dilatation différentielle.

Le but de l'invention vise à éliminer cet inconvénient et à cet effet, elle a pour objet un dispositif comprenant une pluralité de tubes réalisés en une première matière, montés à l'intérieur d'un corps cylindrique ou calandre réalisé en une seconde matière présentant une dilatation différentielle avec celle des tubes, caractérisé en ce que les tubes sont rigidement fixés par leurs extrémités, respectivement à deux pièces dont l'une au moins est flottante par le fait qu'elle est reliée à la calandre par un joint souple annulaire dont les bords intérieur et extérieur sont respectivement pincés sur la pièce flottante et sur la calandre.

L'autre pièce peut être reliée à la calandre, soit par un second joint souple annulaire fixé de la même façon, soit au moyen d'une plaque indéformable.

Quel que soit le mode de réalisation, l'invention permet de résoudre le problème de la dilatation différentielle entre des tubes et une calandre, grâce au fait que ces éléments ne sont plus directement en contact entre eux, comme c'était le cas dans la technique antérieure susmentionnée, mais sont reliés par un joint souple qui leur permet de se dilater indépendamment l'un de l'autre.

Un mode de réalisation de l'invention sera décrit à présent à titre d'exemple non limitatif en regard du dessin annexé dans lequel :
la figure 1 est une vue en coupe d'un module de filtration ;
la figure 2 est une vue en plan de la figure 1 ; et
la figure 3 montre une variante de réalisation du mode de fixation des extrémités inférieures des tubes filtrants.

La description du dispositif sera faite dans le cas particulier de la séparation de fines particules de catalyseur d'une charge hydrocarbonée, mais il faudra garder à l'esprit qu'elle s'applique à tout dispositif comprenant des tubes fixés dans une calandre avec laquelle ils présentent une dilatation différentielle.

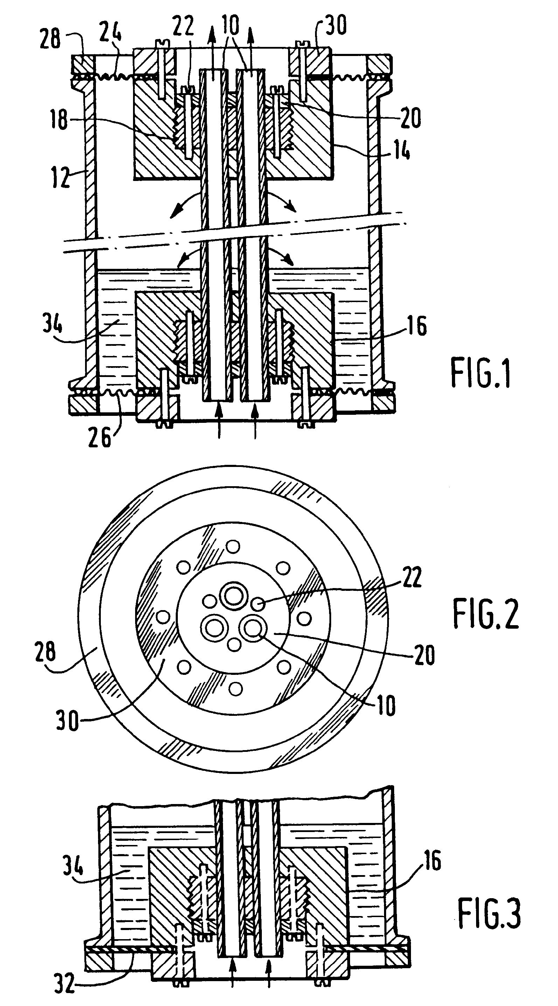

Avec référence aux figures 1 et 2, le module de filtration comprend une pluralité de tubes ou barrières minérales 10 montées en parallèle à l'intérieur d'une calandre 12. Des fonds bombés, non représentés, relient la calandre respectivement à des tuyauteries d'entrée et de sortie, non représentées.

Selon l'invention, les barrières 10 sont rigidement fixées par leurs extrémités dans deux pièces flottantes 14, 16, généralement en forme de disque ou de cuvette creuse. Le fond des pièces flottantes est traversé par les tubes et ces derniers sont maintenus par une matière de remplissage 18, telle qu'un ciment réfractaire, que l'on verse à froid dans les pièces flottantes, et qui est susceptible de durcir, la matière de remplissage est compactée au moyen d'une contre-plaque 20 fixée au moyen de boulons 22. Les extrémités des tubes peuvent faire saillie au-dessus de la contre-plaque.

Les pièces flottantes sont reliées à la calandre 12 par des joints souples annulaires 24, 26 dont les bords intérieur et extérieur sont respectivement pincés sur les pièces flottantes et sur la calandre par des bagues 28, 30.

Les barrières 10 ne sont donc plus en contact avec la calandre, de sorte que le phénomène de dilatation différentielle n'entraîne plus leur rupture.

Le même résultat est obtenu dans le mode de réalisation de la figure 3 qui diffère de celui de la figure 2 par le fait que la pièce inférieure 16 est reliée à la calandre par une plaque indéformable 32. En effet, bien qu'à ce niveau les barrières soient rigidement liées à la calandre, l'écart de dilatation entre barrières et calandre peut se rattraper à leur extrémité supérieure.

Les joints 24, 26 doivent avoir une bonne tenue à la température et à une pression transmembranaire de l'ordre de 10⁶Pa, et ils doivent pouvoir supporter une déformation de quelques millimètres, par exemple 10 mm. On choisira typiquement des joints souples métalliques, par exemple le joint onduleux en inox de la Société NYDEGGER, qui présente en outre des ondulations de l'ordre du millimètre, de manière à lui permettre de mieux encaisser les torsions.

Les essais effectués avec le dispositif de séparation selon l'invention ont été très satisfaisants. Un module à trois barrières a été utilisé, comme l'indique la figure 1. En présence de suspension de particules solides de catalyseur dans un liquide, il a été soumis à des cycles de montée en température de 20 à 310°C pendant 3 heures, puis de descente à 20° en 2 heures, à raison de deux cycles par jour pendant 2 semaines. Aucune fuite n'a pu être décelée. Le filtrat 34 recueilli à l'intérieur de la calandre 12 contenait une proportion inférieure à 10 ppm de fines.

Comme on l'a déjà signalé, le principe de barrières solidaires entre elles et raccordées aux pièces flottantes par un ciment réfractaire, alors que les pièces flottantes sont liées à la calandre par des joints souples, est généralisable à tout ensemble de tubes en toute matière, par exemple en verre ou métal et à d'autres usages que celui décrit ici.

## Revendications

1. Dispositif comprenant une pluralité de tubes (10) réalisés en une première matière et montés à l'intérieur d'un corps cylindrique ou calandre (12) réalisé en une seconde matière présentant une dilatation différentielle avec celle des tubes, caractérisé en ce que les tubes (10) sont rigidement fixés par leurs extrémités, respectivement à deux pièces (14, 16) dont l'une au moins est flottante par le fait qu'elle est reliée à la calandre par un joint souple annulaire (24, 26) dont les bords intérieur et extérieur sont respectivement pincés sur la pièce flottante et sur la calandre.

2. Dispositif selon la revendication 1, caractérisé en ce que les deux pièces sont flottantes (14, 16) et reliées à la calandre (12) par deux joints annulaires souples (24, 26).

3. Dispositif selon la revendication 1, caractérisé en ce que l'une des pièces (14) est flottante et reliée à la calandre par un joint annulaire souple (24), tandis que l'autre pièce (26) est reliée à la calandre par une plaque indéformable (32).

4. Dispositif selon l'une des revendications précédentes, caractérisé en ce que chaque pièce (14, 16) est en forme de disque ou cuvette creuse dont le fond est traversé par les tubes, ces derniers étant maintenus par une matière de remplissage (18), telle qu'un ciment réfractaire, que l'on peut verser à froid dans lesdites pièces, et qui est susceptible de durcir.

5. Dispositif selon la revendication 4, caractérisé en ce que la matière de remplissage est compactée au moyen d'une contre-plaque (20) fixée au moyen de boulons (22).

6. Dispositif selon la revendication 1, caractérisé en ce que les joints annulaires souples (24, 26) sont métalliques.

7. Dispositif selon la revendication 6, caractérisé en ce que lesdits joints souples sont en inox.

8. Dispositif selon la revendication 7, caractérisé en ce que lesdits joints souples en inox, présentent des ondulations.

## Patentansprüche

1. Vorrichtung mit einer Vielzahl von Rohren (10) aus einem ersten Werkstoff im Innern eines zylindrischen Gehäuses oder Kalanders (12) aus einem zweiten Werkstoff mit einem anderen Ausdehnungskoeffizienten als die Rohre, dadurch gekennzeichnet, daß die Rohre (10) an ihren Enden mit zwei Teilen (14, 16) fest verbunden sind, von denen mindestens eines beweglich ist, da es mit dem Kalander über ein ringförmiges elastisches Anschlußstück (24, 26) verbunden ist, dessen innere und äußere Kanten entsprechend auf dem beweglichen Teil und auf dem Kalander aufgeklemmt sind.

2. Vorrichtung nach Anspruch 1, dadurch gekennzeichnet, daß die beiden Teile (14, 16) beweglich und mit dem Kalander (12) über zwei ringförmige elastische Anschlußstücke (24, 26) verbunden sind.

3. Vorrichtung nach Anspruch 1, dadurch gekennzeichnet, daß eines der Teile (14) beweglich und mit dem Kalander über ein ringförmiges elastisches Anschlußstück (24) vrbunden ist, während das andere Teil (26) mit dem Kalander durch eine feststehende Platte (32) in Verbindung steht.

4. Vorrichtung nach irgendeinem der vorstehenden Ansprüche, dadurch gekennzeichnet, daß jedes Teil (14, 16) in Form einer Hohlscheibe oder -schale ausgebildet ist, durch dessen Unterseite die Rohre verlaufen, wobei letztere durch ein Füllmaterial (18) wie zum Beispiel einen Schamottemörtel gehalten werden, der im kalten Zustand in die Teile eingegossen wird und dort aushärten kann.

5. Vorrichtung nach Anspruch 4, dadurch gekennzeichnet, daß das Füllmaterial mittels einer durch Schrauben (22) befestigten Gegenplatte (20) verdichtet wird.

6. Vorrichtung nach Anspruch 1, dadurch gekennzeichnet, daß die ringförmigen elastischen Anschlußstücke (24, 26) aus Metall hergestellt sind.

7. Vorrichtung nach Anspruch 6, dadurch gekennzeichnet, daß die ringförmigen elastischen Anschlußstücke (24, 26) aus nichtrostendem Werkstoff bestehen.

8. Vorrichtung nach Anspruch 7, dadurch gekennzeichnet, daß die elastischen Anschlußstücke aus nichtrostendem Werkstoff mit Wellen versehen sind.

## Claims

1. A device comprising a plurality of tubes (10) made of a first material and mounted inside a cylindrical member or vessel (12) made of a second material having a differential dilatation with respect to that of the tubes, characterized in that the tubes (10) are fixed rigidly by their ends respectively to two members (14, 16) at least one of which is floating owing to the fact that it is connected to the vessel by a flexible ring joint (24, 26), the inner and outer edges of which are respectively pinched on the floating member and on the vessel.

2. A device according to claim 1, characterized in that the two members (14, 16) are floating and connected to the vessel (12) by two flexible ring joints (24, 26).

3. A device according to claim 1, characterized in that one (14) of the members is floating and connected to the vessel by a flexible ring joint (24), while the other member (26) is connected to the vessel by a non-deformable plate (32).

4. A device according to any one of the preceding claims, characterized in that each member (14, 16) is in the form of a disk or hollow bowl, the base of which is passed through by the tubes, these latter being supported by a filling material (18), such as refractory cement, which may be poured cold into said members and which is capable of hardening.

5. A device according to claim 4, characterized in that the filling material is compressed by means of a counterplate (20) fixed by means of bolts (22).

6. A device according to claim 1, characterized in that the flexible ring joints (24, 26) are metal.

7. A device according to claim 6, characterized in that said flexible ring joints are of stainless steel.

8. A device according to claim 7, characterized in that said flexible joints of stainless steel exhibit undulations.
